(19)

Europäisches
Patentamt
European
Patent Office
Office européen
des brevets

(11) **EP 4 450 669 A1**

(12) **EUROPEAN PATENT APPLICATION**
published in accordance with Art. 153(4) EPC

(43) Date of publication:
**23.10.2024 Bulletin 2024/43**

(21) Application number: **22907992.6**

(22) Date of filing: **16.12.2022**

(51) International Patent Classification (IPC):
*C22C 38/34* (2006.01)    *C22C 38/00* (2006.01)
*C22C 38/24* (2006.01)    *C21D 8/12* (2006.01)
*H01F 1/147* (2006.01)

(52) Cooperative Patent Classification (CPC):
**C21D 8/12; C22C 38/00; C22C 38/24; C22C 38/34;
H01F 1/147**

(86) International application number:
**PCT/KR2022/020561**

(87) International publication number:
**WO 2023/113527 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.12.2021 KR 20210182103**

(71) Applicant: POSCO Co., Ltd
**Pohang-si, Gyeongsangbuk-do 37859 (KR)**

(72) Inventors:
- **KO, Kyungjun**
  **Pohang-si, Gyeongsangbuk-do 37859 (KR)**
- **SONG, Jaehwa**
  **Pohang-si, Gyeongsangbuk-do 37859 (KR)**
- **LEE, Sangwoo**
  **Pohang-si, Gyeongsangbuk-do 37859 (KR)**

(74) Representative: **Meissner Bolte Partnerschaft
mbB
Patentanwälte Rechtsanwälte
Postfach 86 06 24
81633 München (DE)**

(54) **GRAIN-ORIENTED ELECTRICAL STEEL SHEET AND METHOD FOR MANUFACTURING SAME**

(57)    The present invention pertains to a grain-oriented electrical steel sheet and a method for manufacturing same. The grain-oriented electrical steel sheet according to an embodiment of the present invention comprises: by wt%, a base material containing 2.5~4.0 wt% of Si, 0.005 wt% or less of C, 0.015~0.040 wt% of Al, 0.04~0.15 wt% of Mn, 0.005 wt% or less of N, 0.03~0.10 wt% of Sn, 0.05~0.2 wt% of Cr, 0.010~0.050 wt% of P, and 0.01~0.05 wt% of Sb, with the remainder comprising Fe and inevitable impurities; and a metal oxide layer disposed on the base material, and has an average iron loss ($W_{17/50}$) of 0.80 W/kg or less, wherein the maximum emission intensity ratio of the metal oxide layer may satisfy Expression 1.

<Expression 1>

$$I(Cr)/I\_max(Mg) \leq 2\ \%$$

(In Expression 1, I(Cr) is the intensity of Cr in the metal oxide layer, and I_max(Mg) denotes the maximum emission intensity of Mg in the metal oxide layer)

FIG. 1

**Description**

**[Technical Field]**

The present invention relates to an electrical steel sheet, and more particularly, to a grain-oriented electrical steel sheet and a method for manufacturing the same.

**[Background Art]**

A grain-oriented electrical steel sheet is used as an iron core material in stationary equipment such as transformers, motors, generators, and other electronic devices. Since a final product of the grain-oriented electrical steel sheet has a texture in which the grains are oriented in a (110)[001] direction, and has extremely excellent magnetic properties in the rolling direction, the grain-oriented electrical steel sheet can be used as an iron core material for equipment such as transformers, motors, generators, and other electronic devices, and requires a low iron loss to reduce energy loss and high magnetic flux density to miniaturize power generation devices.

Currently, in order to deal with global warming by reducing $CO_2$ emissions, there is a worldwide trend toward energy saving and high-efficiency products. As the demand for highly efficient electrical devices using less electrical energy increases, a social demand for the development of a grain-oriented electrical steel sheet with a superior low core loss has been increased. Accordingly, much research and development have been conducted to reduce the iron loss of the grain-oriented electrical steel sheet. Among them, one effective method for reducing the iron loss is a technique for refining secondary recrystallized grains. When the secondary recrystallized grains are refined, the magnetic domains in the steel sheet become smaller, and a heat loss due to eddy currents accompanying magnetic wall displacement when the steel sheet is excited may be reduced.

The iron loss of the grain-oriented electrical steel sheet may be divided into a hysteresis loss and an eddy current loss, and various methods such as a method of increasing the specific resistivity or reducing the sheet thickness of the product have been proposed to reduce the eddy current loss. As a method of reducing the sheet thickness of the product, there is the difficulty of rolling the grain-oriented electrical steel sheet, which is a difficult-to-roll product, to an ultra-thin material. However, the biggest problem in making a ultra-thin product with very low iron loss characteristics is a problem that as the thickness becomes thinner, it is difficult to make the integration of the Goss orientation, which is a secondary recrystallization structure of the grain-oriented electrical steel sheet, very strong.

The hysteresis loss increases because the magnetic wall displacement is hindered by fine precipitates or inclusions. The base material of the final product needs to be managed cleanly so that components such as C, N, O, and S are extremely low, and when the Goss integration is strong, the hysteresis loss decreases.

This is because as the product thickness becomes thinner, the loss of precipitates from the surface accelerates during the secondary recrystallization annealing process, especially in a section where secondary recrystallization in the Goss orientation occurs, so that there is a problem that it is difficult to maintain the texture and grain growth suppression for Goss orientation growth. This problem is a problem directly related to the magnetic properties of the product, and in ultra-thin products, the secondary recrystallization phenomenon in the exact Goss orientation is unstable and non-uniform, and as a result, the secondary grain size is not uniform, or fine grains with partially poor orientation integration are formed, and thus there is a problem that it is difficult to secure low core loss characteristics.

In addition, as the product becomes thinner, the proportion of the coating layer in the overall product thickness increases. As the base coating becomes thicker, the proportion of the coating layer increases, and the iron loss may decrease.

As a method for overcoming a precipitate loss, there has been proposed a method of preventing the precipitate loss by increasing the fraction of $N_2$ gas during the secondary recrystallization annealing process, but there is a problem of causing surface defects such as a nitrogen outlet on the surface of the product sheet. In addition, a manufacturing method using a simultaneous decarburization and nitrification method was proposed. When a decarburized sheet is manufactured using the simultaneous decarburization and nitrification method, it was specified that there was a difference between the surface grain size and the center layer grain size, and it was proposed that it was necessary to control the difference within a certain range.

In addition, a method including segregation elements such as Sb, Sn, and P has been proposed. The segregation element is included to dramatically improve magnetic properties and can be used as an auxiliary inhibitor to compensate for the loss of precipitates when manufacturing ultra-thin products. However, the method of adding the segregation element has a problem that ultra-thin rolling is difficult when the segregation element is added in an excessive amount, and when the segregation element is added in an excessive amount, the oxide layer becomes uneven and thin, resulting in side effects of deteriorating the characteristics of the base coating and causing precipitate loss, so that there is a problem in that the magnetic properties cannot be stably secured.

In addition, there has been proposed a method of controlling the oxidation potential and nitrification of a front end in the primary recrystallization annealing process when manufacturing ultra-thin products. However, when manufacturing ultra-thin products, there is a problem that the effect of loss of precipitates becomes very sensitive.

In addition, there was proposed a method of adding chromium (Cr) to the slab and controlling the amount of nitrification gas at the front and rear ends in the primary recrystallization annealing process. However, in the method, the amount of nitrogen in the thickness direction of the steel sheet was uniformly maintained, but there is a problem that aluminum nitride (AlN) precipitates are distributed unevenly, so that deviations in magnetic properties still exist. In addition, a chromium oxide layer is formed by adding the chromium, and while the oxide layer depth is increased, a base coating thickness is increased, so that it is difficult to control oxidation and nitrification, and there is a problem of increasing the hysteresis loss of thin products where the proportion of the coating layer in the product increases.

During primary recrystallization annealing, decarburization and nitrification reactions occur through the surface layer of the steel sheet. At this time, the speed and timing of decarburization and nitrification are changed depending on the shape of the oxide layer formed in the surface layer. The depth and composition of the oxide layer generated during the primary recrystallization annealing process are changed sensitively depending on a furnace atmosphere such as temperature and oxidation potential, a steel component content, and a surface shape. In particular, components such as Sb, Sn, and Cr change the oxide layer formation behavior depending on the added amount and as a result, affect the characteristics of the product to derive optimal conditions according to the product characteristics.

**[Disclosure]**

**[Technical Problem]**

The present disclosure attempts to provide an ultra-thin grain-oriented electrical steel sheet having a magnetic improvement effect, excellent surface properties, and a reduced iron loss variation.

The present disclosure also attempts to provide a method for manufacturing a grain-oriented electrical steel sheet having the advantages.

**[Technical Solution]**

According to an exemplary embodiment of the present invention, a grain-oriented electrical steel sheet includes: by wt%, a base material containing 2.5~4.0 wt% of Si, 0.005 wt% or less of C, 0.015~0.040 wt% of Al, 0.04~0.15 wt% of Mn, 0.005 wt% or less of N, 0.03~0.10 wt% of Sn, 0.05~0.2 wt% of Cr, 0.010~0.050 wt% of P, and 0.01~0.05 wt% of Sb, with the remainder comprising Fe and inevitable impurities; and a metal oxide layer disposed on the base material, and has an average iron loss ($W_{17/50}$) of 0.80 W/kg or less, wherein the maximum emission intensity ratio of the metal oxide layer may satisfy Expression 1.

<Expression 1>

$$I(Cr)/I\_max(Mg) \leq 2 \%$$

(In Expression 1, I(Cr) is the intensity of Cr in the metal oxide layer, and I_max(Mg) denotes the maximum emission intensity of Mg in the metal oxide layer)

In an exemplary embodiment, the grain-oriented electrical steel sheet may include, by wt%, 0.01 wt% or less of S (excluding 0%), 0.002-0.01 wt% of V, and 0.002~0.010 wt% of Ti. In an exemplary embodiment, the grain-oriented electrical steel sheet may have an iron loss variation of 0.07 or less. In an exemplary embodiment, the grain-oriented electrical steel sheet may have a thickness of 0.2 mm or less.

According to another exemplary embodiment of the present invention, a method for manufacturing a grain-oriented electrical steel sheet includes: hot rolling a steel slab including, by wt%, a base material containing 2.5~4.0 wt% of Si, 0.005 wt% or less of C, 0.015~0.040 wt% of Al, 0.04~0.15 wt% of Mn, 0.005 wt% or less of N, 0.03~0.10 wt% of Sn, 0.05~0.2 wt% of Cr, 0.010~0.050 wt% of P, and 0.01~0.05 wt% of Sb, with the remainder comprising Fe and inevitable impurities; cold rolling the hot rolled steel sheet; primary recrystallization annealing the cold-rolled cold rolled steel sheet; and secondary recrystallization annealing the steel sheet subjected to the primary recrystallization annealing, wherein the primary recrystallization annealing step includes a temperature rising step, a first cracking step, and a second cracking step, the temperature rising step may be performed in an oxidizing atmosphere having an oxidation potential of 0.5 to 2.0, the first cracking step may be performed in an atmosphere in which the oxidation potential is controlled to a range of less than 0.5, and the second cracking step may be performed in an atmosphere in which the oxidation potential is controlled to a range of 0.5 or more.

In an exemplary embodiment, the steel slab may include, by wt%, 0.01 wt% or less of S (excluding 0%), 0.002~0.01 wt% of V, and 0.002~0.010 wt% of Ti. In an exemplary embodiment, the first recrystallization annealing step may be performed at a rate of 100°C/s or more.

In an exemplary embodiment, the first recrystallization annealing step may include a rapid temperature rising step at a temperature of 250 to 700°C. In an exemplary embodiment, the first cracking step and the second cracking step may be performed at 800 to 900°C. In an exemplary embodiment, before the hot rolling of the steel slab, the method may include heating the steel slab at 1,230°C or less.

**[Advantageous Effects]**

According to an exemplary embodiment of the present invention, it is possible to provide a grain-oriented electrical steel sheet having a magnetic improvement effect due to a low iron loss variation, excellent yield strength with excellent surface properties, and excellent surface properties even in an ultra-thin grain-oriented electrical steel sheet by controlling a steel composition.

According to another exemplary embodiment of the present invention, it is possible to provide a method for manufacturing a grain-oriented electrical steel sheet having the advantages.

**[Description of the Drawings]**

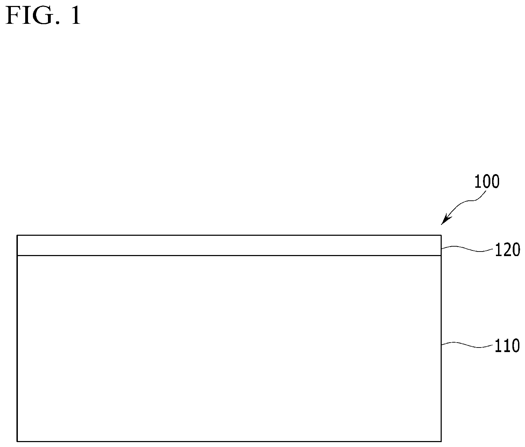

FIG. 1 illustrates a grain-oriented electrical steel sheet according to an exemplary embodiment of the present invention.

**[Mode for Invention]**

Terms such as first, second and third are used to describe various parts, components, regions, layers and/or sections, but are not limited thereto. These terms are only used to distinguish one part, component, region, layer or section from another part, component, region, layer, or section. Accordingly, a first part, component, region, layer, or section to be described below may be referred to as a second part, component, region, layer or section without departing from the scope of the present invention.

The terms used herein is for the purpose of describing specific exemplary embodiments only and are not intended to be limiting of the present invention. The singular forms used herein include plural forms as well, if the phrases do not clearly have the opposite meaning. The "comprising" used in the specification means that a specific feature, region, integer, step, operation, element and/or component is embodied and other specific features, regions, integers, steps, operations, elements, components, and/or groups are not excluded.

When a part is referred to as being "above" or "on" the other part, the part may be directly above or on the other part or may be followed by another part therebetween. In contrast, when a part is referred to as being "directly on" the other part, there is no intervening part therebetween.

Unless defined otherwise, all terms including technical and scientific terms used herein have the same meaning as commonly understood by those skilled in the art to which the present invention belongs. Commonly used predefined terms are further interpreted as having a meaning consistent with the relevant technical literature and the present invention and are not to be construed as ideal or very formal meanings unless defined otherwise.

In addition, unless otherwise specified, % means weight%, and 1 ppm is 0.0001 weight%.

In an exemplary embodiment of the present invention, the meaning of further including an additional element means replacing and including iron (Fe), which is the remainder by an additional amount of an additional element.

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

FIG. 1 illustrates a grain-oriented electrical steel sheet 100 according to an exemplary embodiment of the present invention.

Referring to FIG. 1, the grain-oriented electrical steel sheet 100 according to an exemplary embodiment of the present invention includes a base material 110 and a metal oxide layer 120 disposed on the base material 110. The base material may include, by wt%, Si: 2.5 to 4.0 wt%, C: 0.03 to 0.09 wt%, Al: 0.015 to 0.040 wt%, Mn: 0.04 to 0.15 wt%, N: 0.002 to 0.012 wt%, Sn: 0.03 to 0.10 wt%, Cr: 0.05 to 0.2 wt%, P: 0.010 to 0.050 wt%, and Sb: 0.01 to 0.05 wt%, and the remainder Fe and other inevitable impurities.

The reason for limiting alloy components will be described below. Hereinafter, wt% may be represented by %.

Silicon (Si): 2.5 to 4.0%

Silicon (Si) plays a role in lowering an iron loss as a core loss by increasing the resistivity of a grain-oriented electrical steel sheet material. The silicon content may be in the range of 2.5 to 4.0%, specifically 3.0 to 3.5%.

If the silicon content exceeds the upper limit of the range, there is a problem that the brittleness of the steel increases and the toughness decreases, and thus the sheet fracture occurrence rate increases during the rolling process, as weldability deteriorates, a load is placed on a cold rolling operation, and during cold rolling, the sheet temperature required for pass aging is lowered, and secondary recrystallization formation becomes unstable. If the silicon content exceeds the lower limit of the range, there is a problem that the resistivity decreases and thus the iron loss deteriorates.

Carbon (C): 0.03 to 0.09%

Carbon (C) is an element that induces the formation of an austenite phase. As the carbon content increases, a ferrite-austenite phase transformation is activated during a hot rolling process, and a long elongated hot-rolled band structure formed during the hot-rolling process increases to suppress a ferrite grain growth during the annealing process of the hot-rolled sheet. In addition, as the carbon content increases, the texture after cold rolling is improved due to an increase in the stretched hot-rolled band structure having a higher strength than a ferrite structure, and the refinement of initial particles of a hot-rolled sheet annealing structure, which is a cold rolling start structure, and the Goss fraction increases. The increase in the Goss fraction is increasing the Goss fraction in the primary recrystallized grains due to the increased pass aging effect during cold rolling due to residual carbon present in the steel sheet after annealing the hot-rolled sheet.

The carbon content may be 0.03 to 0.09%, specifically 0.05 to 0.070%.

If the carbon content is out of the upper limit of the range, the decarburization annealing time becomes longer during decarburization and nitrification annealing, and there is a problem of lowering productivity. In addition, if the decarburization at the beginning of heating is not sufficient, there is a problem that the primary recrystallization grains become uneven, and the secondary recrystallization becomes unstable. In addition, there is a problem that magnetic properties are deteriorated due to a magnetic aging phenomenon.

The carbon is removed by decarburization during the primary recrystallization annealing process and may be included in the base material 110 of the finally manufactured grain-oriented electrical steel sheet 100 at 0.005% or less, specifically 0.003%.

Aluminum (Al): 0.015 to 0.040%

Aluminum (Al) is bound with nitrogen (N) to precipitate into aluminum nitride (AlN), but during decarburization and nitrification annealing, fine precipitates, nitrides in the form of (Al, Si, Mn)N and AlN are formed to serve to suppress strong crystal grains. The aluminum content may be 0.015 to 0.040%. Specifically, the aluminum content may be in the range of 0.020 to 0.038%.

If the aluminum content is out of the upper limit of the range, there is a problem that the precipitate grows coarsely, which reduces an effect of suppressing the grain growth. If the aluminum content is out of the lower limit of the range, there is a problem that the number and volume fraction of precipitates formed are low, so that the grain growth suppressing effect is not sufficiently expressed.

Manganese (Mn): 0.04 to 0.15%

Manganese (Mn), like silicon (Si), has an effect of reducing the iron loss by increasing resistivity. In addition, the manganese is an important element that reacts with nitrogen introduced through nitrification with the silicon to form precipitates of (Al, Si, Mn)N, thereby suppressing the growth of primary recrystallized grains and causing secondary recrystallization. In addition, the manganese forms sulfide-based precipitates with copper (Cu) to improve primary recrystallized grain uniformity and serves as an auxiliary inhibitor for the formation of secondary recrystallization.

The manganese content may be 0.04 to 0.15%, specifically 0.05 to 0.10%. If the manganese content is outside the upper limit of the range, the slab reheating temperature needs to be increased to adjust (Cu, Mn)S fine precipitates, and when the slab reheating temperature is increased, the primary recrystallization grains become extremely fine, and the temperature of the primary recrystallization annealing needs to be raised above the range, thereby causing grain ununiformity.

In addition, there is a problem that in addition to $Fe_2SiO_4$, a large amount of (Fe, Mn) and Mn oxides are formed on the surface of the steel sheet to hinder the formation of a base coating formed during secondary recrystallization annealing, thereby deteriorating the surface quality and to cause uneven phase transformation between ferrite and austenite in the primary recrystallization annealing process, so that the size of the primary recrystallized grains becomes uneven, and as a result, secondary recrystallization becomes unstable. If the manganese content is out of the lower limit of the range, there is a problem that there are not exhibited the effect of reducing the iron loss described above and the effect of suppressing the growth of primary recrystallized grains by forming the precipitates of (Al, Si, Mn) N, thereby causing secondary recrystallization.

Nitrogen (N): 0.002 to 0.012%

Nitrogen (N) is an element that reacts with aluminum (Al) to refine grains. When these elements are properly distributed, these elements serve to secure an appropriate primary recrystallization grain size by appropriately refining the structure after cold rolling. The nitrogen content may be in the range of 0.0020 to 0.012%, specifically 0.0025 to 0.010%.

If the nitrogen content is out of the upper limit of the range, the primary recrystallized grains may become excessively fine, and as a result, undesirable orientations due to the fine grains may form secondary recrystallization, thereby deteriorating magnetic properties. If the nitrogen content is out of the lower limit of the range, there is a problem in that the primary recrystallization inhibition effect is insufficient and a stable grain growth inhibition effect cannot be obtained.

Since the nitrogen is partially removed during the secondary recrystallization annealing process, the base material 110 of the finally manufactured grain-oriented electrical steel sheet 100 may include the nitrogen of 0.005% or less, specifically 0.003% or less.

Antimony (Sb): 0.01 to 0.05%

Antimony (Sb) has the effect of increasing the number of Goss-oriented grain nuclei generated during the cold rolling process and improving the fraction of grains with the Goss orientation in a primary recrystallization texture. In addition, the secondary recrystallization initiation temperature of the grains with a Goss texture is increased during high-temperature annealing for secondary recrystallization by segregating at the primary recrystallization grain boundaries to obtain a secondary recrystallization microstructure with excellent integration, thereby increasing a magnetic flux density. The antimony content may be in the range of 0.01 to 0.05%, and specifically 0.020 to 0.045%.

If the antimony content is out of the upper limit of the range, there is a problem that the size of the primary recrystallized grains becomes excessively small to lower the secondary recrystallization initial temperature, thereby deteriorating the magnetic properties, or the inhibitory force against grain growth becomes too large so as not to form secondary recrystallization. If the antimony content is out of the lower limit of the range, there is a problem that there are not exhibited the effect of improving the fraction of grains having the Goss orientation described above, and the effect of obtaining the secondary recrystallization microstructure and increasing the magnetic flux density.

Tin (Sn): 0.03 to 0.10%

Tin (Sn) is a grain boundary segregation element and is known as a grain growth inhibitor due to an element that hinders the movement of grain boundaries. In addition, the number of Goss-orientated nuclei growing into the secondary recrystallization texture increases by increasing the grain fraction of the Goss orientation in the primary recrystallization texture. In addition, as the tin is added, the size of the secondary recrystallization microstructure decreases. While the size of the secondary recrystallization microstructure decreases, as the grain size decreases, the eddy current loss decreases, thereby reducing the iron loss of the final product.

In addition, the tin plays an important role in suppressing grain growth through segregation at grain boundaries and not only improves the effect of suppressing the grain growth driving force of the refined primary recrystallization microstructure, but also prevents a phenomenon of reducing the grain growth inhibition force by coarsening particles causing the effect of suppressing the growth of grains such as (Al, Si, Mn)N and AlN during the high-temperature annealing process to form the secondary recrystallization texture. The tin content may be 0.03 to 0.10%, specifically 0.03 to 0.09%.

If the tin content is out of the upper limit of the range, there is a problem that the grain growth inhibition force increases excessively, and the grain size of the primary recrystallization microstructure needs to be reduced to relatively increase the grain growth driving force, so that decarburization annealing needs to be performed at a low temperature, and as a result, a good surface cannot be secured because the appropriate oxide layer cannot be controlled.

In addition, in terms of mechanical properties, brittleness increases due to excessive segregation of grain boundary segregation elements, which may cause sheet fracture during the manufacturing process. If the tin content is out of the lower limit of the range, there is a problem in that the effect of adding tin is not exhibited.

Chromium (Cr): 0.05 to 0.2%

Chromium (Cr) is an element that promotes oxidation formation, and an element that suppresses the formation of a dense oxide layer in a surface layer and assists the formation of a fine oxide layer in a depth direction when chromium (Cr) is added within the range. The chromium is added together with the antimony and the tin and thus the formation of $FeCr_2O_4$ in the surface layer of the oxide layer increases, thereby assisting the formation of the oxide layer in the depth direction. The chromium content may be in the range of 0.05 to 0.20%.

In the case of the chromium, when added to a thin product of 0.20 mmt or less, a thick oxide layer is formed, and the composition of the oxide layer changes to affect decarburization and nitrification. If the chromium content is not properly controlled in the decarburization and nitrification annealing process, the formation of the primary recrystallization grains and precipitates cannot be properly controlled, which may cause a magnetic deviation in an ultra-thin grain-oriented electrical steel sheet product. In addition, a chromium (Cr) enriched layer is formed in a base coating layer of the final product sheet, but in the case of a thin grain-oriented electrical steel sheet, there is a problem of causing an iron loss variation by making the base coating layer thick and increasing ununiformity.

Phosphorus (P): 0.010 to 0.050%

Phosphorus (P) is an element that exhibits a similar effect to tin (Sn) and antimony (Sb) and can play an auxiliary role by segregating at grain boundaries to hinder the movement of grain boundaries, and simultaneously suppress grain growth. In addition, in terms of a microstructure, there is an effect of improving a {110}<001> texture. The phosphorus content may be in the range of 0.010 to 0.050%, and specifically 0.015 to 0.045%.

If the phosphorus content is excessively high, there is a problem that brittleness increases, and rollability is greatly reduced. If the phosphorus content is excessively small, there is a problem in that the effect due to the addition of phosphorus is not exhibited.

In an exemplary embodiment, the grain-oriented electrical steel sheet 100 may further include, by wt%, sulfur (S): 0.01% wt%, or less (excluding 0%), vanadium (V): 0.002 to 0.01 wt%, and titanium (Ti): 0.002 to 0.010 wt%.

Sulfur (S): 0.010% or less

Sulfur (S) is an element that has a high solid solution temperature and severe segregation during hot rolling and is one of the inevitable impurities contained during steelmaking although it is preferred not to be contained as much as possible. In addition, sulfur (S) is an element that affects primary recrystallization grain uniformity by forming (Mn, Cu)S. The sulfur content may be in the range of 0.010 wt% or less, specifically 0.0010 to 0.0080 wt%.

Titanium (Ti): 0.002 to 0.010%

Titanium (Ti) is an element that forms nitride and becomes titanium nitride (TiN) in a pre-hot rolling step to lower the nitrogen content and plays a role in suppressing grain growth through fine precipitation. The titanium content may be in the range of 0.002 to 0.010%, and in this range, there are exhibited the effects of suppressing grain growth by forming the titanium nitride precipitates and reducing a variation of grain size within a coil by reducing fine precipitates of aluminum nitride (AlN).

Vanadium (V): 0.002 to 0.01%

Vanadium (V) is an element that forms carbides and nitrides and plays a role in suppressing grain growth through fine precipitation. The vanadium content may be in the range of 0.002 to 0.01%, and in this range, there is exhibited an effect of reducing grain size variation within the coil by an effect of suppressing grain growth due to the formation of fine precipitates.

In an exemplary embodiment, the base material may further include 0.002 to 0.010 wt% of at least one of titanium (Ti) and vanadium (V). When the vanadium and the titanium are included alone, each content may be 0.002 to 0.010 wt% alone, and when the vanadium and the titanium are included simultaneously, the total content of the vanadium and the titanium may be 0.002 to 0.010 wt%. More specifically, the content of titanium and vanadium may be in the range of 0.0030 to 0.0070 wt%.

In an exemplary embodiment, the grain-oriented electrical steel sheet 100 may include inevitable impurities such as Zr, Cu, Ni, and Mo, in addition to the aforementioned elements. The impurities are strong carbonitride forming elements, and it is preferable not to be added as much as possible, and each of the impurities may be contained in an amount of 0.01 wt% or less.

The remainder includes iron (Fe). In addition, the remainder may include inevitable impurities. The inevitable impurities refer to impurities that are inevitably mixed during the manufacturing process of steelmaking and the grain-oriented electrical steel sheet. Since the inevitable impurities are widely known, detailed descriptions are omitted. In an exemplary embodiment of the present invention, the addition of elements other than the above-described alloy components is not excluded, and various elements may be included within a range that does not impair the technical spirit of the present invention. When additional elements are further included, the additional elements are included by replacing the remainder Fe.

In an exemplary embodiment, the metal oxide layer 120 may be disposed on the base material 110. The metal oxide layer 120 may include a material such as magnesium (Mg), aluminum (Al), boron (B), antimony (Sb), tin (Sn), molybdenum (Mo), tungsten (W), and chromium (Cr).

In an exemplary embodiment, the maximum emission intensity ratio of the metal oxide layer 120 satisfies the following Expression 1.

<Expression 1>

$$I(Cr)/I\_max(Mg) \leq 2\ \%$$

(In Expression 1, I(Cr) is the intensity of Cr in the metal oxide layer, and I_max(Mg) denotes the maximum emission intensity of Mg in the metal oxide layer)

The maximum emission intensity may be obtained by measuring a ratio of the maximum intensity of a magnesium (Mg) component and the intensity of chromium (Cr) at the same thickness through elemental analysis of the metal oxide layer in the thickness direction using a glow discharge surface analysis method.

As the value of I(Cr)/I_max(Mg) is less than 2%, the base coating layer is formed densely and uniformly, which has an advantage of uniform formation of the coating layer. On the other hand, when the value of I(Cr)/I_max(Mg) is greater than 2%, the ununiformity of the coating layer is increased due to the influence of the Cr enriched layer, thereby causing a problem of iron loss variation.

In an exemplary embodiment, the thickness of the grain-oriented electrical steel sheet 100 may be 0.20 mm or less. When the thickness of the grain-oriented electrical steel sheet 100 is greater than 0.20 mm, the effect of coating ununiformity due to Cr enrichment on the iron loss variation is reduced.

In an exemplary embodiment, an average iron loss ($W_{17/50}$) of the grain-oriented electrical steel sheet 100 may be 0.80 W/kg or less. The iron loss ($W_{17/50}$) is the magnitude (W/kg) of iron loss induced under the conditions of 1.7 Tesla and 50 Hz. It is possible to provide the grain-oriented electrical steel sheet 100 with excellent magnetic properties by satisfying the average iron loss value.

In an exemplary embodiment, the iron loss variation of the grain-oriented electrical steel sheet 100 may be 0.07 or less. The iron loss variation refers to a variation of the iron loss value. When the value of the iron loss variation satisfies 0.07 or less, it is possible to provide the grain-oriented electrical steel sheet 100 with excellent magnetic properties.

According to another exemplary embodiment of the present invention, a method for manufacturing a grain-oriented electrical steel sheet includes: hot rolling a steel slab including, by wt%, a base material containing 2.5~4.0 wt% of Si, 0.005 wt% or less of C, 0.015~0.040 wt% of Al, 0.04~0.15 wt% of Mn, 0.005 wt% or less of N, 0.03~0.10 wt% of Sn, 0.05~0.2 wt% of Cr, 0.010~0.050 wt% of P, and 0.01~0.05 wt% of Sb, with the remainder including Fe and inevitable impurities; cold rolling the hot rolled steel sheet; primary recrystallization annealing the cold-rolled cold rolled steel sheet; and secondary recrystallization annealing the steel sheet subjected to the primary recrystallization annealing. The detailed description of the steel slab is the same as that of the above-described grain-oriented electrical steel sheet without contradiction, and thus overlapping descriptions will be omitted.

Before the hot rolling of the steel slab, the method may further include heating the steel slab at 1,230°C or less. Specifically, the heating of the steel slab may include heating the steel slab in the range of 1,130 to 1,200°C.

The precipitate may be partially solutionized through the heating of the steel slab. In addition, cracks in the width direction of the sheet may be prevented in a subsequent hot rolling process by preventing a columnar structure of the slab from growing coarsely, thereby improving the actual yield. In the heating of the steel slab, if the temperature range is excessively high, a furnace may be repaired by melting the surface portion of the slab, and the furnace life may be shortened. In an exemplary embodiment, it is also possible to hot-roll the steel slab continuously cast without the heating of the steel slab.

In the hot rolling of the steel slab, the hot rolled sheet with a thickness of 1.8 to 2.3 mm may be manufactured. In an exemplary embodiment, the hot rolling of the steel slab may further include cooling and winding the steel slab after completion of rolling considering the rolling load.

After the hot rolling of the steel slab, the method may include annealing the hot rolled steel sheet. The annealing of the hot rolled steel sheet may be performed by a process of heating to a temperature of 950 to 1,100°C and then cracking and then cooling to a temperature of 850 to 1,000°C.

The cold rolling of the hot rolled steel sheet may be performed through once cold rolling or may be performed through a plurality of passes. In an exemplary embodiment, in the cold rolling of the hot rolled steel sheet, at least once warm rolling may be performed at a temperature of 200 to 300°C during rolling. A pass-aging effect is provided through the warm rolling, and the cold rolled steel sheet may be manufactured with a final thickness of 0.18 to 0.20 mm. The cold-rolled cold rolled steel sheet is subjected to decarburization, recrystallization of the deformed structure, and nitrification treatment using nitrifying gas during the primary recrystallization annealing process.

The primary recrystallization annealing of the cold-rolled cold rolled steel sheet may include a temperature rising step, a first cracking step, and a second cracking step. Specifically, the primary recrystallization annealing may include rapid heating in the temperature rising step, and then decarburization and nitrification annealing operations including the first cracking step and the second cracking step.

The temperature rising step is a step of heating the cold rolled steel sheet to a cracking temperature of the first cracking step. In an exemplary embodiment, in the temperature rising step, rapid heating may be performed at a temperature raising rate of 100°C/s or more at a temperature of 250 to 700°C. The rapid heating may be performed in an oxidizing atmosphere with an oxidation potential ($P_{H20}/P_{H2}$) of 0.5 to 2.0. Specifically, the rapid heating may be performed in an oxidizing atmosphere with an oxidation potential ($P_{H20}/P_{H2}$) of 1.0 to 2.0.

If the oxidation potential ($P_{H20}/P_{H2}$) value during rapid heating exceeds the upper limit, there is a problem of suppressing decarburization and nitrification reactions due to the excessive formation of the oxide layer. If the oxidation potential ($P_{H20}/P_{H2}$) value during rapid heating exceeds the lower limit, there is a problem that it is difficult to uniformly control the oxide layer formed in a subsequent process, especially to control a Cr oxide layer.

The first cracking step is a step of cracking the steel sheet heated through the temperature rising step in a temperature range of 700 to 850°C. In an exemplary embodiment, in the first cracking step, the oxidation potential may be in a range of less than 0.5. Specifically, in the first cracking step, the oxidation potential may be in a range of 0.1 to 0.5 or less. Specifically, the oxidation potential may be in a range of 0.3 to 0.5.

When the first cracking step is performed within the range of the oxidation potential, there is an advantage of being able to uniformly control the oxide layer, specifically, uniformly control the formation of the Cr oxide layer and uniformly control the decarburization reaction. When the range of the oxidation potential exceeds the upper limit in the first cracking step, there is a problem of suppressing the decarburization and nitrification reactions due to the excessive formation of the oxide layer. When the range of the oxidation potential exceeds the lower limit in the first cracking step, there is a problem that it is difficult to uniform control the formed oxide layer, especially control the Cr oxide layer.

The second cracking step is a step of cracking the steel sheet subjected to the first cracking step in a temperature range of 800 to 900°C. The first cracking stage and the second cracking stage may be distinguished through the oxidation degree of the atmosphere.

In an exemplary embodiment, in the second cracking step, the oxidation potential may be in the range of 0.5 or more. In an exemplary embodiment, in the second cracking step, the oxidation potential may be in the range of 0.5 to 0.8. Specifically, the oxidation potential may be in the range of 0.5 to 0.7.

When the second cracking step is performed within the range of the oxidation potential, there is an advantage of uniform control of the decarburization and nitrification reactions in relation to the first cracking step. When the range of the oxidation potential exceeds the upper limit in the second cracking step, there is a problem of suppressing the decarburization and nitrification reactions due to the excessive formation of the oxide layer. When the range of the oxidation potential exceeds the lower limit in the second cracking step, there is a problem in that it is difficult to uniformly control the oxide layer and uniformly control the nitrification.

In an exemplary embodiment, at least one of the temperature rising step, the first cracking step, and the second cracking step may be performed in an atmosphere containing at least one of hydrogen and nitrogen. In an exemplary embodiment, at least one of the temperature rising step, the first cracking step, and the second cracking step may be performed by adding ammonia to an atmosphere containing at least one of hydrogen and nitrogen.

As such, in the primary recrystallization annealing process, nitrification and decarburization may be performed simultaneously through the control of the oxidation potential described above. When the oxidation potential in the first cracking step and the oxidation potential in the second cracking step are different from each other as described above, there is an advantage of more uniformly forming a microstructure, a surface oxide layer, and precipitates of the decarburized sheet by uniformly controlling the oxide layer, in particular, controlling decarburization and nitrification reactions while controlling the Cr oxide layer.

The secondary recrystallization annealing of the steel sheet subjected to the primary recrystallization annealing causes secondary recrystallization by applying an annealing separator to the primary recrystallized steel sheet and then performing final annealing for a long time, so as to form a {110}<001> Goss texture in which a {110} plane of the steel sheet is parallel to the rolling surface and a <001> direction is parallel to the rolling direction. The annealing separator may be prepared based on, for example, MgO, and as non-limiting examples, various types of annealing separators may be used.

Through the secondary recrystallization annealing, the {110}<001> texture is formed by secondary recrystallization, an insulation property is provided by forming a glassy film through the reaction of MgO with the oxide layer formed during decarburization, and impurities that deteriorate magnetic properties may be removed. As a final annealing method, mixed gas of nitrogen and hydrogen is maintained in a temperature rise section before the secondary recrystallization to protect nitride, which is a grain growth inhibitor, so that the secondary recrystallization may be developed well, and after the secondary recrystallization is completed, impurities may be removed by maintaining in a 100% hydrogen atmosphere for a long time.

Hereinafter, a grain-oriented electrical steel sheet and a method for manufacturing the same according to the present invention will be described in detail through Examples and Comparative Examples. The following Examples are for reference to explain the present invention in detail, but the present invention is not limited thereto and can be implemented in various forms.

<Steel type>

Table 1 below shows compositions of major components for steel types A to E. Table 1 below discloses steels that satisfy all composition ranges of the present invention.

(Table 1)

| Steel type (wt%) | Si | C | Mn | P | Al | N | Sb | Sn | Cr |
|---|---|---|---|---|---|---|---|---|---|
| A | 3.4 | 0.06 | 0.1 | 0.03 | 0.037 | 0.006 | 0.02 | 0.06 | 0.05 |
| B | 3.4 | 0.055 | 0.1 | 0.03 | 0.037 | 0.005 | 0.02 | 0.09 | 0.08 |
| C | 3.4 | 0.065 | 0.1 | 0.03 | 0.036 | 0.005 | 0.04 | 0.04 | 0.1 |
| D | 3.4 | 0.06 | 0.1 | 0.03 | 0.036 | 0.005 | 0.02 | 0.06 | 0.15 |
| E | 3.4 | 0.065 | 0.1 | 0.03 | 0.036 | 0.005 | 0.02 | 0.03 | 0.2 |

In Table 1 above, it can be seen that all steels A to E are included in the scope of the present invention.

<Measurement of steel sheet properties>

Ingots were prepared after vacuum dissolving steel types A to E having the component compositions shown in Table 1, and grain-oriented electrical steel sheets were manufactured under the manufacturing conditions shown in Table 2 below. Specifically, the ingot was prepared, heated at 1,150° C for 210 minutes, and then hot-rolled to manufacture a hot rolled steel sheet with a thickness of 2.0 mm. After pickling, the hot rolled steel sheet was cold-rolled once with a thickness of 0.20 mm or 0.18 mm at a reduction ratio of 90% or more.

The cold-rolled cold rolled steel sheet was rapidly heated to 250 to 700°C at a temperature rising rate of 100°C/sec or more, and an oxidation potential ($P_{H20}$ / $P_{H2}$) was measured under the conditions shown in Table 2 below. Thereafter, during decarburization and nitrification annealing, the oxidation potential was maintained for 180 seconds in a wet atmosphere and an ammonia mixed gas atmosphere at a temperature of 850°C at the oxidation potential ($P_{H20}/P_{H2}$) in Table 2 of in a first-stage decarbonization and nitrification operation and a second-stage decarbonization and nitrification operation, and simultaneous decarburization and nitrification annealing was performed so that the carbon content was 30 ppm or less and the total nitrogen content was 200 ppm or more.

The steel sheet subjected to the decarburization and nitrification annealing was applied with an annealing separator containing 95 wt% of MgO and 5 wt% of $TiO_2$ as a solid content and subjected to secondary recrystallization annealing on a coil. The secondary recrystallization annealing was performed in a mixed atmosphere of 25 vol% nitrogen and 75 vol% hydrogen to 1,200°C, and after reaching 1,200°C, maintained in a 100% hydrogen atmosphere for 10 hours or more and then furnace-cooled.

Thereafter, an insulating coating layer forming composition containing a mixture of metal phosphate and colloidal silica was applied and heat-treated to form an insulating coating layer. Referring to Table 2 below, the maximum emission intensity ratio [I(Cr)/I_max(Mg)] and the iron loss variation measured for each condition were shown. The maximum emission intensity ratio is obtained by measuring a ratio between the maximum emission intensity of Mg and the intensity of Cr in the metal oxide layer. Specifically, the maximum emission intensity was obtained by measuring a ratio of the maximum intensity of the Mg component and the Cr intensity at the same thickness through elemental analysis of the metal oxide layer in the thickness direction using a glow discharge surface analysis method.

A first-stage SDN oxidation potential and a second-stage SDN oxidation potential in Table 2 below refer to a method of controlling an inhibitor in the decarburization process after cold rolling.

(Table 2)

| Steel type | Cold rolled thickness [mm] | Rapid heating oxidation potential | First cracking oxidation potential | Second cracking oxidation potential | Average iron loss ($W_{17/50}$) [W/kg] | Magnetic flux density [B8] | Iron loss variation | Emission intensity ratio [I(Cr)/I_max(Mg)] | Note |
|---|---|---|---|---|---|---|---|---|---|
| A | 0.2 | 1.2 | 0.3 | 0.6 | 0.76 | 1.92 | 0.03 | 1.8% | Inventive Material 1 |
| B | | 1.2 | 0.4 | 0.7 | 0.75 | 1.92 | 0.03 | 1.7% | Inventive Material 2 |
| C | | 1.8 | 0.7 | 0.8 | 0.80 | 1.89 | 0.08 | 1.5% | Comparative Material 1 |
| D | | 2.5 | 0.3 | 1.0 | 0.85 | 1.90 | 0.1 | 2.1% | Comparative Material 2 |
| E | | 0.3 | 0.3 | 0.8 | 0.86 | 1.89 | 0.12 | 2.2% | Comparative Material 3 |
| A | 0.18 | 1.0 | 0.3 | 0.6 | 0.70 | 1.92 | 0.03 | 1.8% | Inventive Material 3 |
| B | | 1.5 | 0.7 | 0.8 | 0.80 | 1.89 | 0.1 | 1.9% | Comparative Material 4 |
| C | | 2.3 | 0.3 | 0.8 | 0.83 | 1.89 | 0.1 | 2.2% | Comparative Material 5 |
| D | | 0.3 | 0.4 | 0.8 | 0.80 | 1.89 | 0.1 | 2.5% | Comparative Material 6 |

In Table 2 above, it can be seen that Invention Materials in which the oxidation potential of rapid temperature rising and simultaneous decarbonization and nitrification annealing was controlled within the control range had a small emission intensity ratio of about 2% and had an excellent iron loss variation. On the other hand, it can be confirmed that Comparative Materials out of the control range had an ununiform grain size or inferior iron loss variation due to poor base coating. Specifically, it was confirmed that Comparative Examples 1 and 4 had a problem with non-uniform grain sizes, and Comparative Examples 2, 3, 5, and 6 had a problem with poor base coating layers.

The present invention can be manufactured in various different forms, not limited to the above embodiments, and it will be appreciated to those skilled in the present invention that the present invention may be implemented in other specific forms without changing the technical idea or essential features of the present invention. Therefore, it should be appreciated that the aforementioned exemplary embodiments are illustrative in all aspects and are not restricted.

**Claims**

1. A grain-oriented electrical steel sheet comprising:

by wt%, a base material containing 2.5~4.0 wt% of Si, 0.005 wt% or less of C, 0.015~0.040 wt% of Al, 0.04~0.15 wt% of Mn, 0.005 wt% or less of N, 0.03~0.10 wt% of Sn, 0.05~0.2 wt% of Cr, 0.010~0.050 wt% of P, and 0.01~0.05 wt% of Sb, with the remainder comprising Fe and inevitable impurities; and
a metal oxide layer disposed on the base material,
wherein an average iron loss ($W_{17/50}$) is 0.80 W/kg or less, and
the maximum emission intensity ratio of the metal oxide layer satisfies Expression 1.

<Expression 1>

I(Cr)/I_max(Mg) ≤ 2 %

(In Expression 1, I(Cr) is the intensity of Cr in the metal oxide layer, and I_max(Mg) denotes the maximum emission intensity of Mg in the metal oxide layer)

2. The grain-oriented electrical steel sheet of claim 1, wherein:
the grain-oriented electrical steel sheet comprises, by wt%, 0.01 wt% or less of S (excluding 0%), 0.002~0.01 wt% of V, and 0.002~0.010 wt% of Ti.

3. The grain-oriented electrical steel sheet of claim 1, wherein:
an iron loss variation is 0.07 or less.

4. The grain-oriented electrical steel sheet of claim 1, wherein:
a thickness is 0.2 mm or less.

5. A method for manufacturing a grain-oriented electrical steel sheet comprising:

hot rolling a steel slab including, by wt%, a base material containing 2.5~4.0 wt% of Si, 0.005 wt% or less of C, 0.015~0.040 wt% of Al, 0.04~0.15 wt% of Mn, 0.005 wt% or less of N, 0.03~0.10 wt% of Sn, 0.05~0.2 wt% of Cr, 0.010~0.050 wt% of P, and 0.01~0.05 wt% of Sb, with the remainder comprising Fe and inevitable impurities;
cold rolling the hot rolled steel sheet;
primary recrystallization annealing the cold-rolled cold rolled steel sheet; and
secondary recrystallization annealing the steel sheet subjected to the primary recrystallization annealing,
wherein the primary recrystallization annealing step comprises a temperature rising step, a first cracking step, and a second cracking step,
the temperature rising step is performed in an oxidizing atmosphere having an oxidation potential of 0.5 to 2.0,
the first cracking step is performed in an atmosphere in which the oxidation potential is controlled to a range of less than 0.5, and
the second cracking step is performed in an atmosphere in which the oxidation potential is controlled to a range of 0.5 or more.

6. The method for manufacturing the grain-oriented electrical steel sheet of claim 5, wherein:
the steel slab comprises, by wt%, 0.01 wt% or less of S (excluding 0%), 0.002~0.01 wt% of V, and 0.002~0.010 wt% of Ti.

7. The method for manufacturing the grain-oriented electrical steel sheet of claim 5, wherein:
the first recrystallization annealing step is performed at a rate of 100°C/s or more.

8. The method for manufacturing the grain-oriented electrical steel sheet of claim 5, wherein:
the first recrystallization annealing step comprises a rapid temperature rising step at a temperature of 250 to 700°C.

9. The method for manufacturing the grain-oriented electrical steel sheet of claim 5, wherein:
the first cracking step and the second cracking step are performed at 800 to 900°C.

10. The method for manufacturing the grain-oriented electrical steel sheet of claim 5, further comprising:

before the hot rolling of the steel slab,
heating the steel slab at 1,230°C or less.

FIG. 1

## INTERNATIONAL SEARCH REPORT

| | |
|---|---|
| | International application No. |
| | **PCT/KR2022/020561** |

**A. CLASSIFICATION OF SUBJECT MATTER**

**C22C 38/34**(2006.01)i; **C22C 38/00**(2006.01)i; **C22C 38/24**(2006.01)i; **C21D 8/12**(2006.01)i; **H01F 1/147**(2006.01)i

According to International Patent Classification (IPC) or to both national classification and IPC

**B. FIELDS SEARCHED**

Minimum documentation searched (classification system followed by classification symbols)

C22C 38/34(2006.01); C21D 8/12(2006.01); C21D 9/46(2006.01); C22C 38/00(2006.01); H01F 1/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 방향성 전기강판(oriented electrical steel plate), 열간압연(hot rolling), 냉간압연 (cold rolling), 재결정 소둔(recrystallization annealing), 승온(heating), 균열(cracking), 산화능(oxidizing ability)

**C. DOCUMENTS CONSIDERED TO BE RELEVANT**

| Category* | Citation of document, with indication, where appropriate, of the relevant passages | Relevant to claim No. |
|---|---|---|
| A | JP 3386751 B2 (KAWASAKI STEEL CORP.) 17 March 2003 (2003-03-17)<br>See paragraphs [0006], [0028] and [0052]; and claims 1-3. | 1-10 |
| A | KR 10-1751523 B1 (POSCO) 27 June 2017 (2017-06-27)<br>See claims 1 and 6. | 1-10 |
| A | KR 10-1999-0088281 A (KAWASAKI STEEL CORP.) 27 December 1999 (1999-12-27)<br>See claims 1 and 7. | 1-10 |
| A | US 5261972 A (KUROKI et al.) 16 November 1993 (1993-11-16)<br>See claim 1. | 1-10 |
| A | JP 10-121135 A (KAWASAKI STEEL CORP.) 12 May 1998 (1998-05-12)<br>See paragraph [0019]. | 1-10 |

| ☐ Further documents are listed in the continuation of Box C. | ☑ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 March 2023** | **24 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/020561**

| Patent document cited in search report | | | Publication date (day/month/year) | Patent family member(s) | | | Publication date (day/month/year) |
|---|---|---|---|---|---|---|---|
| JP | 3386751 | B2 | 17 March 2003 | CN | 1254021 | A | 24 May 2000 |
| | | | | CN | 1254021 | C | 24 May 2000 |
| | | | | DE | 69913624 | T2 | 09 June 2004 |
| | | | | EP | 0987343 | A1 | 22 March 2000 |
| | | | | EP | 0987343 | B1 | 17 December 2003 |
| | | | | JP | 2000-096149 | A | 04 April 2000 |
| | | | | JP | 2000-355717 | A | 26 December 2000 |
| | | | | JP | 3312000 | B2 | 05 August 2002 |
| | | | | KR | 10-0597772 | B1 | 10 July 2006 |
| | | | | KR | 10-2000-0023267 | A | 25 April 2000 |
| | | | | US | 2002-0000265 | A1 | 03 January 2002 |
| | | | | US | 6287392 | B1 | 11 September 2001 |
| | | | | US | 6475304 | B2 | 05 November 2002 |
| KR | 10-1751523 | B1 | 27 June 2017 | CN | 108474054 | A | 31 August 2018 |
| | | | | CN | 108474054 | B | 05 June 2020 |
| | | | | EP | 3395961 | A1 | 31 October 2018 |
| | | | | EP | 3395961 | A4 | 31 October 2018 |
| | | | | EP | 3395961 | B1 | 03 June 2020 |
| | | | | JP | 2019-507244 | A | 14 March 2019 |
| | | | | JP | 6808735 | B2 | 06 January 2021 |
| | | | | US | 2019-0010572 | A1 | 10 January 2019 |
| | | | | WO | 2017-111551 | A1 | 29 June 2017 |
| KR | 10-1999-0088281 | A | 27 December 1999 | EP | 0957180 | A2 | 17 November 1999 |
| | | | | JP | 11-323438 | A | 26 November 1999 |
| | | | | JP | 2000-034521 | A | 02 February 2000 |
| | | | | JP | 3357602 | B2 | 16 December 2002 |
| | | | | JP | 3386742 | B2 | 17 March 2003 |
| | | | | KR | 10-0580356 | B1 | 16 May 2006 |
| | | | | US | 2002-0005231 | A1 | 17 January 2002 |
| | | | | US | 6280534 | B1 | 28 August 2001 |
| US | 5261972 | A | 16 November 1993 | EP | 0539858 | A1 | 05 May 1993 |
| | | | | EP | 0539858 | B1 | 09 April 1997 |
| | | | | JP | 05-125446 | A | 21 May 1993 |
| | | | | JP | 2620438 | B2 | 11 June 1997 |
| | | | | KR | 10-1993-0008166 | A | 21 May 1993 |
| | | | | KR | 10-1995-0005793 | B1 | 31 May 1995 |
| JP | 10-121135 | A | 12 May 1998 | BR | 9707089 | A | 09 March 1999 |
| | | | | CN | 1190132 | A | 12 August 1998 |
| | | | | CN | 1190132 | C | 12 August 1998 |
| | | | | DE | 69705282 | T2 | 11 October 2001 |
| | | | | EP | 0835944 | A1 | 15 April 1998 |
| | | | | EP | 0835944 | B1 | 20 June 2001 |
| | | | | JP | 10-140243 | A | 26 May 1998 |
| | | | | JP | 3415377 | B2 | 09 June 2003 |
| | | | | JP | 3674183 | B2 | 20 July 2005 |
| | | | | KR | 10-0352675 | B1 | 18 November 2002 |
| | | | | KR | 10-1998-0032726 | A | 25 July 1998 |
| | | | | US | 5885371 | A | 23 March 1999 |

Form PCT/ISA/210 (patent family annex) (July 2022)